(19) Europäisches Patentamt
European Patent Office
Office européen des brevets

(11) **EP 4 345 701 A1**

(12) **EUROPEAN PATENT APPLICATION**

(43) Date of publication:
**03.04.2024 Bulletin 2024/14**

(21) Application number: **23194232.7**

(22) Date of filing: **30.08.2023**

(51) International Patent Classification (IPC):
**G06N 20/00** (2019.01)    **G06Q 20/00** (2012.01)

(52) Cooperative Patent Classification (CPC):
**G06N 20/00; G06Q 30/0201; G06Q 50/01; G06Q 50/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 US 202217958275**

(71) Applicant: **Intuit Inc.
Mountain View, CA 94043 (US)**

(72) Inventors:
• **SCOTT, Glenn Carter
Mountain View, 94043 (US)**
• **MEIKE, Roger C.
Mountain View, 94043 (US)**
• **MOUATADID, Lalla M.
Mountain View, 94043 (US)**
• **CHAN, Christopher M.
Mountain View, 94043 (US)**

(74) Representative: **D Young & Co LLP
120 Holborn
London EC1N 2DY (GB)**

(54) **MODELING AND MANAGING AFFINITY NETWORKS**

(57)    A method models and manages affinity networks. The method includes receiving real-time transaction data; processing a transaction of the real-time transaction data to identify a source node and a target node of a graph; and processing the transaction to update an affinity score of an edge from the source node to the target node. The method further includes receiving a request; selecting, responsive to the request, the target node using the affinity score after updating the affinity score; and presenting a response using the target node.

FIGURE 2

**Description**

BACKGROUND

There are many kinds of networks. Communication, social, financial, supply-chain, and so forth, in which the participants of the network interface with the network using computing systems. In each of these networks, the participants have roles, responsibilities, and performance requirements with and for each other that may be measured and tracked using computing systems. Yet these may or may not be uniformly performed. One participant may have good communication, another may have greater or lesser capacity to perform, another may perform only intermittently, and so forth.

SUMMARY

In general, in one or more aspects, the disclosure relates to a method that models and manages affinity networks. The method includes receiving real-time transaction data; processing a transaction of the real-time transaction data to identify a source node and a target node of a graph; and processing the transaction to update an affinity score of an edge from the source node to the target node. The method further includes receiving a request; selecting, responsive to the request, the target node using the affinity score after updating the affinity score; and presenting a response using the target node.

In general, in one or more aspects, the disclosure relates to a system that models and manages affinity networks. The system includes a transaction controller configured to update an affinity score; a selection controller configured to select a target node; and an application executing on one or more servers. The application is configured for receiving real-time transaction data; processing a transaction of the real-time transaction data to identify a source node and the target node of a graph; and processing, by the transaction controller, the transaction to update the affinity score of an edge from the source node to the target node. The application is further configured for receiving a request; selecting, by the selection controller and responsive to the request, the target node using the affinity score after updating the affinity score; and presenting a response using the target node.

In general, in one or more aspects, the disclosure relates to a method that uses affinity networks. The method includes transmitting a request and receiving a response to the request. The response is generated by processing a transaction of the real-time transaction data to identify a source node and a target node of a graph; processing the transaction to update an affinity score of an edge from the source node to the target node; and selecting the target node using the affinity score after updating the affinity score. The method further includes displaying the response.

Other aspects of the disclosure will be apparent from the following description and the appended claims.

BRIEF DESCRIPTION OF DRAWINGS

Figure 1 shows a diagram of a system in accordance with disclosed embodiments.

Figure 2 shows a flowchart in accordance with disclosed embodiments.

Figure 3A, Figure 3B, and Figure 3C show examples in accordance with disclosed embodiments.

Figure 4A and Figure 4B show computing systems in accordance with disclosed embodiments.

DETAILED DESCRIPTION

In general, embodiments are directed to modeling and managing affinity networks. The affinity networks may be used to provide suggestions for which participants of the network to use to perform a transaction. For example, a user of the system may request a suggestion for performing a transaction and the system may provide the suggestion for performing the transaction with another participant based on the affinity between the user and the other participant.

Embodiments of the disclosure dynamically measure the performance of the roles, responsibilities, and requirements of a participant from the perspective of the other participants. In one embodiment, the dynamic measurement may be performed by processing the transactions that occur between the participants of the affinity network. Participants of the network may automatically reconfigure the network, or create new networks, in order to maximize usage of the network.

Participants are represented by nodes of a graph that represents an affinity network. The relationships between the participants are the edges of the graph. Types of relationships, for example, are communication relationships, social relationships, business relationships, customer relationships, and so forth, that may be measured by affinity scores. Each node has one or more edges connecting them, 1-to-1, to other nodes. Each edge represents a unidirectional affinity (as measured by an affinity score) between one node and another node. A node that is connected by an edge to another node is a neighbor to the other node. In one embodiment, node A having an edge to node B, means node B is a neighbor of node A - but not vice-versa. Affinity is the quantified relationship qualities between two nodes. For example, affinity may represent moral or social values, affection, performance, and so forth.

For each edge of a node, a vector or tuple of real values is maintained. The real values lie in the range [0, 1) and represent the affinity of the corresponding neighbor with respect to a specific relationship.

The figures of the disclosure show diagrams of embodiments that are in accordance with the disclosure. The embodiments of the figures may be combined and may include or be included within the features and embodiments described in the other figures of the application. The features and elements of the figures are, individually and as a combination, improvements to the technology of graphs, transaction processing, and affinity networks. The various elements, systems, components, and steps shown in the figures may be omitted, repeated, combined, and/or altered as shown from the figures. Accordingly, the scope of the present disclosure should not be considered limited to the specific arrangements shown in the figures.

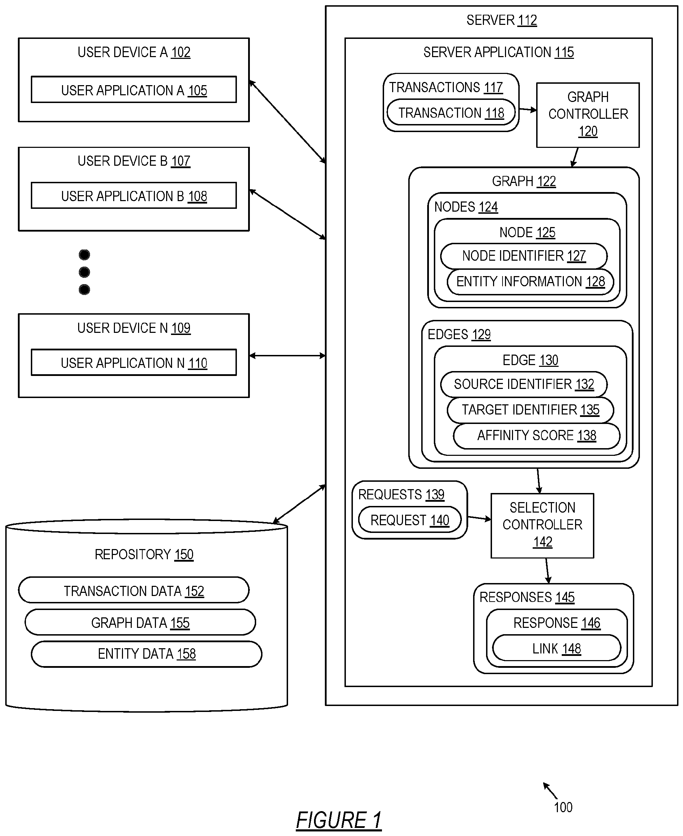

Turning to Figure 1, the system (100) models and manages an affinity network. The affinity network is modeled by the graph (122). The system (100) generates the graph (122) in real time in response to the transactions (117). The system (100) also processes the requests (139) to generate the responses (145) using the graph (122). The system (100) includes the server (112), the user devices A (102) and B (107) through N (109), and the repository (150).

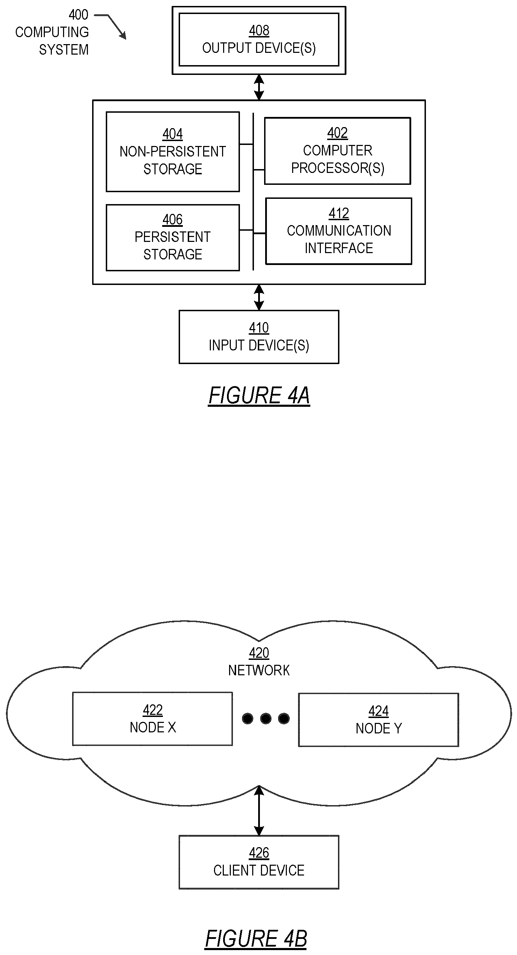

The server (112) is a computing system (further described in Figure 4A). The server (112) may include multiple physical and virtual computing systems that form part of a cloud computing environment. In one embodiment, execution of the programs and applications of the server (112) is distributed to multiple physical and virtual computing systems in the cloud computing environment. The server (112) includes the server application (115).

The server application (115) is a collection of programs that may execute on multiple servers of a cloud environment, including the server (112). The server application (115) processes the transactions (117) in real time with the graph controller and processes the requests (139) with the selection controller (142). In one embodiment, the server application (115) hosts websites and may serve structured documents (hypertext markup language (HTML) pages, extensible markup language (XML) pages, JavaScript object notation (JSON) files and messages, *etc.*) to interact with the user devices A (102) and B (107) through N (109). The server application (115) includes the graph controller (120) and the selection controller (142).

The graph controller (120) is a collection of programs that may operate on the server (112). The graph controller (120) processes the transactions (117) in real time to maintain the graph (122).

The transactions (117) are transactions generated between participants of the affinity network described by the graph (122). The participants use the user devices A (102) and B (107) through N (109) to generate the transactions (117). The transactions (117) are recorded in the transaction data (152). The transactions (117) include the transaction (118).

The transaction (118) is a transaction between two participants. As an example, the transaction (118) may be between a user of the user device A (102) and a user of the user device B (107). In one embodiment, the transaction may be a data processing transaction in which a program the user of the user device A (102) is executed by a computing system the user of the user vice B (107). In one embodiment, the transaction (118) may include the record of a payment from a user of the user device A (102) to a user of the service B (107). The transaction (118) may also include a record of an invoice from the user of the user device B (107) to the user of the user device A (102). The transaction (118) is processed by the graph controller (120) and may correspond to the node (125) and the edge (130).

The graph (122) is a data structure that includes the nodes (124) and the edges (129) stored to the graph data (155). The graph (122) may be updated in real time by the graph controller (120) in response to the transactions (117) that are received by the system (100).

The nodes (124) are the nodes of the graph (122) that represent the participants of the affinity network described by the graph (122). The nodes (124) include the node (125). A subset of the nodes (124) may correspond to the user devices A (102) and B (107) through N (109) that are actively connected to the system (100).

The node (125) represents a participant of the affinity network. The node (125) may correspond to the user device A (102). The node (125) includes the node identifier (127) and the entity information (128).

The node identifier (127) identifies the node (125). The node identifier (127) may be a unique number, a URL, *etc.,* that uniquely identifies the node (125).

The entity information (128) is it data that describes the participant represented by the node (125). The entity information (128) may be a subset of the entity data (158). The entity information (128) may include a unique identifier for the entity, contact information for the entity (email address, phone number, physical address, website uniform resource locator (URL), *etc.*), a link to information about the entity, *etc.* The entity information (128) may also include demographic information, socioeconomic information, *etc.,* about the entity represented by the node (125).

The edges (129) are the edges that connect between the nodes (124) of the graph (122). In one embodiment, the edges (129) are unidirectional edges that start from source nodes and end at target nodes. The edges (129) include affinity scores that quantify the relationships between the nodes (124) and the participants represented by the nodes (124). The edges (129) include the edge (130).

The edge (130) represents a relationship between two nodes of the nodes (124). The edge (130) includes the source identifier (132), the target identifier (135), and the affinity score (138).

The source identifier (132) identifies the source node of the edge (130). The source identifier (132) may be a unique number, a URL, *etc.,* that uniquely identifies the source node. As an example, the value of the source identifier (132) may be the same value as the node identifier (127) of the node (125) to identify the node (125) as the source node for the edge (130).

The target identifier (135) identifies the target node of the edge (130). The target identifier (135) may be the same type of identifier as the source identifier (132) and reference a different node of the nodes (124).

The affinity score (138) quantifies the relationships between the source and target nodes identified with the source identifier (132) and target identifier (135). In one embodiment, the affinity score (138) includes a scaler value that numerically quantifies the relationship between the source and target nodes. In one embodiment, the affinity score (138) includes multiple affinity scores. For example, the affinity score (138) may include a vector of values with multiple dimensions. The different dimensions correspond to different aspects of the relationship between the source and target nodes. For example, the affinity score (138) may include a vector with dimensions for speed, efficiency, transitivity, *etc.* Speed may identify how quickly a transaction may be performed, efficiency may identify an amount of resources used to perform a transaction, and transitivity may identify a level of trust between the participants identified by the source and target nodes. In one embodiment, the affinity score (138) may be normalized to a value in the range [0, 1]. In one embodiment, updates to the affinity score (138) may be calculated using a previous value of the affinity score (138).

The selection controller (142) is a collection of programs that may operate on the server (112). The selection controller (142) processes the requests (139) in real time using the graph (122) to generate the responses (145).

The requests (139) are messages received from the user devices A (102) and B (107) through N (109). In one embodiment, the requests are for suggestions for participants with which to complete a transaction. The requests (139) include the request (140).

The request (140) is a request for a suggestion to be provided in the response (146). For example, the user of the user device A (102) may submit a request for the system (100) to identify another participant of the affinity network that can complete a transaction with the user of the user device A (102). The request (140) may include a node identifier that corresponds to the user device A (102) and to an entity that is a participant of the affinity network. The request may identify a particular type of transaction, which may be used to weight the affinity scores of potential participants.

The responses (145) are messages sent to the user devices A (102) and B (107) through N (109) in response to the requests (139). The responses (145) include the response (146).

The response (146) is a response to the request (140). In one embodiment, the response (146) includes a list of node identifiers. The list of node identifiers may identify the participants that are able to perform the transaction specified in the request (140) with the user device A (102). The nodes corresponding to the list of node identifiers may be referred to as potential target nodes. The list of node identifiers may be sorted by the affinity scores between the source node (*i.e.,* the node corresponding to the user device A (102) and the request (140)) and the potential target nodes (*i.e.,* the nodes identified in the list of identifiers). The response (146) includes the link (148).

The link (148) is a reference to another participant. In one embodiment, the link (148) may be a URL that initiates a transaction between the devices represented by the source and potential target nodes. For example, the link (148) identifies the user device B (107) as a device capable of performing the transaction specified in the request (140). The link (148) may be displayed onto the user device A (102). Once selected by the user device A (102) (e.g., by clicking on the link (148)), a transaction between the user device A (102) and the user device B (107) may be performed.

Continuing with Figure 1, the user devices A (102) and B (107) through N (109) are computing systems (further described in Figure 4A). For example, the user devices A (102) and B (107) through N (109) may be desktop computers, mobile devices, laptop computers, tablet computers, server computers, *etc.* The user devices A (102) and B (107) through N (109) include hardware components and software components that operate as part of the system (100). The user devices A (102) and B (107) through N (109) communicate with the server (112) to access, manipulate, and view services and information hosted by the system (100). The user devices A (102) and B (107) through N (109) may communicate with the server (112) using standard protocols and file types, which may include hypertext transfer protocol (HTTP), HTTP secure (HTTPS), transmission control protocol (TCP), internet protocol (IP), hypertext markup language (HTML), extensible markup language (XML), *etc.* The user devices A (102) and B (107) through N (109) respectively include the user applications A (105) and B (108) through N (110).

The user applications A (105) and B (108) through N (110) may each include multiple programs respectively running on the user devices A (102) and B (107) through N (109). The user applications A (105) and B (108) through N (110) may be native applications, web applications, embedded applications, *etc.* In one embodiment, the user applications A (105) and B (108) through N (110) include web browser programs that display web pages from the server (112).

As an example, the user application A (105) may be used to generate the request (140). The system (100) processes the request (140) and generates the response (146). The response (146) is displayed by the user application A (105). The user selects the link (148) of the response (148) and imitates a transaction between the user device A (102) and the user device B (107).

The repository (150) is a computing system that may include multiple computing devices in accordance with the computing system (400) and the nodes (422) and (424) described below in Figures 4A and 4B. The repository (150) may be hosted by a cloud services provider that also hosts the server (112). The cloud services provider may provide hosting, virtualization, and data storage services as well as other cloud services to operate and control the data, programs, and applications that store and retrieve data from the repository (150). The data in the repository (150) includes the transaction data (152), the graph data (155), and the entity data (158).

The transaction data (152) includes the data records for the transactions (117) recorded by the system (100). Each data record may include multiple values and types of data to record a transaction. Different types of transactions may include different types of data.

The graph data (155) stores data for the graphs maintained by the system (100), including the graph (122). The graph data (155) stores records for the nodes (124) and the edges (129) of the graph (122).

The entity data (158) includes data about the entities that participate in the affinity network maintained by the system (100). The entity data (158) includes the entity information (128).

Although shown using distributed computing architectures and systems, other architectures and systems may be used. In one embodiment, the server application (115) may be part of a monolithic application that implements the modeling and management of affinity networks. In one embodiment, the user applications A (105) and B (108) through N (110) may be part of monolithic applications that implement and use affinity networks without the server application (115).

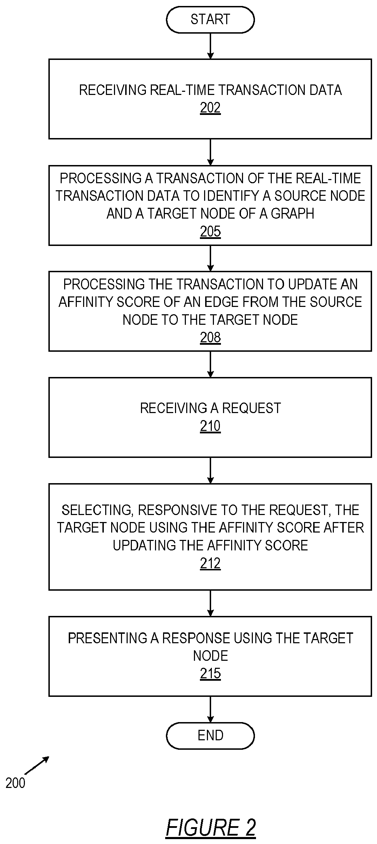

Turning to Figure 2, the process (200) implements and uses affinity networks. The process (200) may be performed by a server interacting with one or more user devices.

At Step 202, real-time transaction data is received. The real-time transaction data may be part of a stream of data that continuously transmits the data records of transactions recorded by the system. The structured text below provides an example of transactions serialized to text form as part of a stream using a structured text format (*e.g.*, JavaScript object notation (JSON)).

```
"transactions": [

{ "source name": "Superman Unlimited",

"target name": "Lex Luthor Laboratories",

"transaction amount": "87.35" },

{ "source name": "Superman Unlimited",

"target name": "Brainiac International",

"transaction amount": "97.72" },

... ]
```

At Step 205, a transaction of the real-time transaction data is processed to identify a source node and a target node of a graph. Data that identifies the participants of the transaction are mapped to the source and target identifiers of the nodes that correspond to the participants of the transaction. For example, the name "Superman Unlimited" may be mapped to the node identifier "1SUP".

At Step 208, the transaction is processed to update an affinity score of an edge from the source node to the target node. After identifying the nodes of the transaction, the system identifies an edge that corresponds to the nodes. The current affinity score for the edge is updated with a new affinity score.

In one embodiment, the affinity score is calculated using a previous affinity score for the edge. In one embodiment, the value of the affinity score may be normalized with a sigmoid function. As an example, Equation 1 below may be used to calculate the affinity score $A_{k+1}$ from the previous affinity score $A_k$. The function "f(·)" is used when the transaction was successful and the function "g(·)" is used when the transaction was not successful. Transactions that are successful may increase the affinity score while transactions that are not successful may decrease the affinity score.

Equations 2 and 3 define the sigmoid function "S(•)" and the inverse sigmoid function "S⁻¹(•)".

$$A_{k+1} = \begin{cases} f(A_k); & \text{when successful} \\ g(A_k); & \text{otherwise} \end{cases} \qquad \text{Eq. 1}$$

$$S(x) = \frac{1}{1+e^{-x}} \qquad \text{Eq. 2}$$

$$S^{-1}(y) = ln\left(\frac{1}{(y^{-1})-1}\right) \qquad \text{Eq. 3}$$

In one embodiment, equations 4 and 5 may be used in which the previous affinity score is linearly transformed and then the sigmoid function is applied to calculate an updated affinity score. The parameters "$a_p$" and "$b_p$" of Equation 4 may be different from the parameters "$a_n$" and "$b_n$" of Equation 5 so that successful transactions increase the affinity score, and unsuccessful transactions decrease the affinity score. For example, the following parameters may be used "$a_p = 1$", "$b_p = 1$", "$a_n = -1$", and "$b_n = -1$".

$$f(A_k) = S(a_p A_k + b_p) \qquad \text{Eq. 4}$$

$$g(A_k) = S(a_n A_k + b_n) \qquad \text{Eq. 5}$$

In one embodiment, Equations 6 and 7 calculate the inverse sigmoid "$S^{-1}(•)$" of the previous affinity score, transform the result, and the take the sigmoid of the transformed result. The parameters "$a_p$" and "$b_p$" of Equation 6 may be different from the parameters "$a_n$" and "$b_n$" of Equation 7 so that successful transactions increase the affinity score, and unsuccessful transactions decrease the affinity score. For example, the following parameters may be used "$a_p = 1$", "$b_p = 1$", "$a_n = -1$", and "$b_n = -1$".

$$f(A_k) = S(a_p \cdot S^{-1}(A_k) + b_p) \qquad \text{Eq. 6}$$

$$g(A_k) = S(a_n \cdot S^{-1}(A_k) + b_n) \qquad \text{Eq. 7}$$

In one embodiment, the edge may be reconfigured to disconnect the target node by setting the affinity score from the source node to the target node to zero. A reconfiguration threshold may be used. When the affinity score is calculated and is below the threshold (e.g., below "0.3"), then the affinity score may be set to "0" to disconnect the edge.
At Step 210, a request is received. The request may be received from a user device. The request may be a message that requests a suggestion for a participant for a transaction. The message of the request may identify the type of transaction to be performed.
At Step 212, the target node is selected responsive to the request. The target node is selected using the affinity score after updating the affinity score. In one embodiment, the system may identify the target node by searching the graph for the edge with the highest affinity score between the source node and the target node that represent the participants of the transaction identified in the request.
In one embodiment, the target node is selected using a resampling variable. The resampling variable may be used to prevent the system from perpetually suggesting the target node, and corresponding participant, with the highest affinity score in response to a request. When the system perpetually suggests the target node with the highest affinity score, the system may become stuck at a local maxima and may not provide the best suggestions. In one embodiment, the resampling variable is a random number that is checked against a resampling threshold when the random number is below the resampling threshold, the target node with the highest affinity score may be suggested. Otherwise, a random target node may be suggested. In one embodiment, the resampling variable is a global countdown variable such that every $n^{th}$ (e.g., every $10^{th}$) request will be given a response that suggests a random node instead of the target node with the highest affinity score.
In one embodiment, the target node is selected using the affinity score and a transitivity score. The affinity score may be a vector of multiple dimensions with different dimensions corresponding to different types of affinities between the source node and the target node. One of the affinities may be the transitivity affinity score, which quantifies the amount of trust that the source node has in the affinities of the target node. Using the transitivity score, a source node may connect to (or be suggested to perform a transaction with) a target node for which there is no edge directly between the source node and the target node.

For example, a first node (representing Superman Unlimited) may have an edge to a second node (representing Batman Industries) but may not have an edge directly to a third node (representing Robin Corporation). Batman Industries may not be able to process the transaction requested by Superman Unlimited, which Robin Corporation can process. The system identifies the path between the nodes for Superman Unlimited and Robin Corporation which includes the edges listed below using a structured data format. The affinity score from Superman Unlimited to Robin Corporation is the transitivity score ("T": "0.7") representing the trust Superman Unlimited has in the affinities of Batman Industries times the affinity score ("A": "0.9") representing the affinity that Batman Industries has with Robin Corporation.

e1: "source": "Superman Unlimited",

"target": "Batman Industries",

"A": "0.8",

"T": "0.7"],

e2: [ "source": "Batman Industries",

"target": "Robin Corporation",

"A": "0.9",

"T": "0.6"]

In one embodiment, the transitivity score ("T") between two nodes may be calculated based on the similarities of the affinities the two nodes have for other nodes of the affinity network. The transitivity score of a node A with respect to a node B may be calculated by averaging the distances between the affinities of a group of nodes, as shown in Equation 8. For example, the node A and the node B may each have edges to, and affinities for, a first node, a second node, ... an $n^{th}$ node. The distance (e.g., function "D(•)") may be determined between the affinity vectors of the nodes A and B to the first node, which is then averaged with the distance between the affinity vectors of the nodes A and B to the second node, *etc.,* to calculate the transitivity score ("T"). In Equation 8 below, the term "n" represents the number of nodes to which the nodes A and B both have affinity vectors. The term "$A_i$" is the $i^{th}$ affinity vector of the node A and the term "$B_i$" $i^{th}$ affinity vector of the node B.

$$T = \frac{1}{n} \sum_{i=1}^{n} D(A_i, B_i) \qquad \text{Eq. 8}$$

In one embodiment, the distance may be the Euclidean distance as shown in Equation 9. Different distance formulas may be used. In Equation 9 below, the term "k" represents the number of affinity scores that are shared between nodes, which is the number of dimensions of the affinity vectors "A" and "B". The term "$a_j$" is the $j^{th}$ component (*i.e.,* dimension) of the affinity vector "A" of the node A. The term "$b_j$" is the $j^{th}$ component (*i.e.,* dimension) of the affinity vector "B" of the node B.

$$D(A, B) = \sqrt{\sum_{j=1}^{k} (a_j - b_j)^2} \qquad \text{Eq. 9}$$

In one embodiment, the affinity score is one of multiple affinity scores of an edge. For example, an affinity score may include an affinity vector with the different dimensions of the vector corresponding to different affinities.

In one embodiment, the target node is selected by calculating a weighted score as a weighted composite of a plurality of affinity scores of the edge. An edge may connect two nodes with an affinity score that includes a vector of multiple affinities (referred to as an affinity vector). The weighted composite affinity score ("C") from the first node to the second node may be calculated as shown in Equation 10 below by taking the dot product between a weight vector ("W") and the affinity vector ("A"). The weights of the weight vector may sum to 1 as shown in Equation 11 below.

$$C = A \cdot W = \sum_{i=1}^{n} a_i \cdot w_i \qquad \text{Eq. 10}$$

$$\sum_{i=1}^{n} w_i = 1 \qquad \text{Eq. 11}$$

In one embodiment, the target node is selected by calculating a composite score as a weighted composite of a plurality of affinity scores of a plurality of edges, which may be referred to as crowdsourcing an affinity score. For example, the affinity score ("$A_{S \to T}$") between a source node S and a target node T may be calculated by calculating a weighted average of the affinity scores of intermediate nodes (referred to as intermediate affinity scores) between the source node and the target node. In Equation 12 below, "$I_n$" identifies the $n^{th}$ intermediate node, "$A_{I_n \to T}$" represents the affinity score between the nodes $I_n$ and T, "$W_{I_n}$" is the weight for the affinity score of the node $I_n$.

$$A_{S \to T} = \frac{1}{n}\left(A_{I_1 \to T} \cdot w_{I_1} + A_{I_1 \to T} \cdot w_{I_2} + \ldots + A_{I_n \to T} \cdot w_{I_n}\right) \qquad \text{Eq. 12}$$

At Step 215, a response is presented using the target node. In one embodiment, the response may be presented by transmitting the response to a user device that displays the response.

In one embodiment, the response is presented to a user device referred to as the requesting device. The requesting device transmitted the original request. The requesting device may be represented by a requesting node of the graph and may display the response with a user interface.

In one embodiment, the response is presented to a requesting device that transmitted the request and the response includes a link to use a target device to process a subsequent transaction. The target device is represented by the target node in the graph. The subsequent transaction may be of the same type as a transaction used to generate the affinity score between the source node and the target node. The link may be a URL that, when selected, triggers the processing of a transaction by the target device by sending a transaction request to the target device.

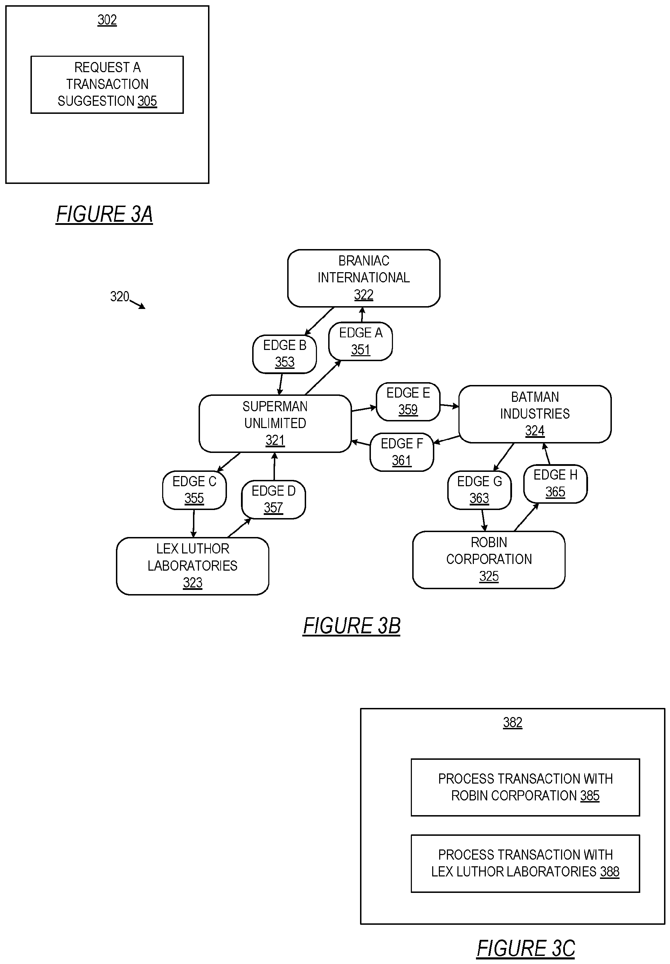

Figure 3A, Figure 3B, and Figure 3C show an example of maintaining and using affinity networks. Superman Unlimited performs several transactions and has used Brainiac International and Lex Luthor Laboratories in the past for these transactions. Superman Unlimited is considering alternative options for processing transactions. In one embodiment, the transactions being processed are compute transactions in which a package of code is executed by the transaction processor. In one embodiment, the transactions being processed are payment transactions that record payments between the entities of the system.

Turning to Figure 3A, the user interface (302) is displayed by a user device of Superman Unlimited. The user interface (302) includes the button (305) to request a suggestion for a particular type of transaction.

Turning to Figure 3B, the graph (320) describes an affinity network between the components of the system. The graph (320) includes the nodes identified in the table below. The system updates the graph (320) in real time based on the transactions processed using the affinity network.

|  | Node identifier | Entity Name |
|---|---|---|
| 321 | 1SUP | Superman Unlimited |
| 322 | 2BRA | Brainiac International |
| 323 | 3LEX | Lex Luthor Laboratories |
| 324 | 4BAT | Batman Industries |
| 325 | 5RCO | Robin Corporation |

Superman Unlimited has recently performed a transaction with Batman Industries but has not performed a transaction with Robin Corporation. Batman Industries has performed several transactions with Robin Corporation. The edges and corresponding affinities between the nodes are shown in the table below. Each row describes an edge from the graph (320). Values in the column "Src" identifies the source node of an edge. Values in the column "Tgt" identifies the target node of an edge. Values in the column "S" are affinity scores that correspond to a speed component (e.g., how quickly transactions are processed, higher is better). Values in the column "E" are affinity scores that correspond to an efficiency component (*e.g.*, how efficiently transactions are processed, higher is better). Values in the column "T" are affinity scores that correspond to a transitivity component from the source node to the target node.

|  | Edge | Src | Tgt | S | E | T |
|---|---|---|---|---|---|---|
| 351 | A | 1SUP | 2BRA | 0.051 | 0.369 | 0.096 |
| 353 | B | 2BRA | 1SUP | 0.751 | 0.570 | 0.837 |
| 355 | C | 1SUP | 3LEX | 0.285 | 0.474 | 0.112 |
| 357 | D | 3LEX | 1SUP | 0.874 | 0.776 | 0.692 |
| 359 | E | 1SUP | 4BAT | 0.581 | 0.514 | 0.816 |
| 361 | F | 4BAT | 1SUP | 0.357 | 0.948 | 0.975 |
| 363 | G | 4BAT | 5RCO | 0.848 | 0.155 | 0.941 |
| 365 | H | 5RCO | 4BAT | 0.809 | 0.670 | 0.967 |

The transaction for which a suggestion is requested by Superman Unlimited places an emphasis on speed over efficiency. To calculate the affinity for the type of transaction or plastic, this system uses a weight vector in which the speed is weighted at 90% and the efficiency is weighted at 10%. The table below shows the weighted composite affinities (C) generated by calculating the dot product of the corresponding affinity dimensions and the weight vector for the edges of the graph (320).

|  | Edge | Src | Tgt | C |
|---|---|---|---|---|
| 351 | A | 1SUP | 2BRA | 0.083 |
| 353 | B | 2BRA | 1SUP | 0.733 |
| 355 | C | 1SUP | 3LEX | 0.304 |
| 357 | D | 3LEX | 1SUP | 0.864 |
| 359 | E | 1SUP | 4BAT | 0.574 |
| 361 | F | 4BAT | 1SUP | 0.416 |
| 363 | G | 4BAT | 5RCO | 0.779 |
| 365 | H | 5RCO | 4BAT | 0.795 |

For example, the weighted composite affinity for edge A (351) is calculated as $[0.051, 0.369]^T \cdot [0.9, 0.1] = 0.051 \cdot 0.9 + 0.369 \cdot 0.1 = 0.083$ where "0.051" is the affinity score for the dimension "S" (speed) for the edge A (351), "0.369" is the affinity score for the dimension "E" (efficiency) for the edge A (351), "0.9" is the weight for the dimension "S", and "0.1" is the weight for the dimension "E".

The system also calculates the transitive affinity ("TA") for the path from Superman Unlimited to Robin Corporation through Batman Industries.

$$TA_{1SUP \to 4RCO} = T_{1SUP \to 4BAT} \cdot C_{4BAT \to 5ROB} = 0.816 \cdot 0.779 = 0.635$$

For the request, the system identifies the following affinities.

| Src | Tgt | C or TA |
|---|---|---|
| 1SUP | 2BRA | 0.083 |
| 1SUP | 3LEX | 0.304 |
| 1SUP | 4BAT | 0.574 |
| 1SUP | 5RCO | 0.635 |

The transitive affinity to Robin Corporation has the highest value followed by the affinity to Batman Unlimited, then by Lex Luthor Laboratories, and then by Brainiac International. The system generates a response that includes two suggestions. The first suggestion is for Robin Corporation even though Superman Unlimited has no direct affinity for Robin Corporation. For the second suggestion, a resampling variable is used that includes a random number and a resampling threshold. The random number is above the resampling threshold of 92% and the system randomly picks Lex Luthor Laboratories as the second suggestion.

Turning to Figure 3C, the user interface (382) is displayed on a computing system of Superman Unlimited. The user interface (382) includes two suggestions incorporated into the links (385) and (388). Selecting the link (385) transmits a request to initiate the transaction with Robin Corporation and selecting the link (388) transmits a request to initiate the transaction with Lex Luthor Laboratories.

Embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure. For example, as shown in FIG. 4A, the computing system (400) may include one or more computer processors (402), non-persistent storage (404), persistent storage (406), a communication interface (412) (*e.g.*, Bluetooth interface, infrared interface, network interface, optical interface, *etc.*), and numerous other elements and functionalities that implement the features and elements of the disclosure. The computer processor(s) (402) may be an integrated circuit for processing instructions. The computer processor(s) may be one or more cores or micro-cores of a processor. The computer processor(s) (402) includes one or more processors. The one or more processors may include a central processing unit (CPU), a graphics processing unit (GPU), a tensor processing unit (TPU), combinations thereof, *etc.*

The input device(s) (410) may include a touchscreen, keyboard, mouse, microphone, touchpad, electronic pen, or any other type of input device. The input device(s) (410) may receive inputs from a user that are responsive to data and messages presented by the output device(s) (408). The inputs may include text input, audio input, video input, *etc.,* which may be processed and transmitted by the computing system (400) in accordance with the disclosure. The communication interface (412) may include an integrated circuit for connecting the computing system (400) to a network (not shown) (e.g., a local area network (LAN), a wide area network (WAN) such as the Internet, mobile network, or any other type of network) and/or to another device, such as another computing device.

Further, the output device(s) (408) may include a display device, a printer, external storage, or any other output device. One or more of the output devices may be the same or different from the input device(s). The input and output device(s) may be locally or remotely connected to the computer processor(s) (402). Many different types of computing systems exist, and the aforementioned input and output device(s) may take other forms. The output device(s) (408) may display data and messages that are transmitted and received by the computing system (400). The data and messages may include text, audio, video, *etc.,* and include the data and messages described above in the other figures of the disclosure.

Software instructions in the form of computer readable program code to perform embodiments may be stored, in whole or in part, temporarily or permanently, on a computer readable medium such as a CD, DVD, storage device, a diskette, a tape, flash memory, physical memory, or any other computer readable storage medium. Specifically, the software instructions may correspond to computer readable program code that, when executed by a processor(s), is configured to perform one or more embodiments of the disclosure, which may include transmitting, receiving, presenting, and displaying data and messages described in the other figures of the disclosure. Additionally, or alternatively, a computer-readable medium can include transient media such as carrier waves and transmission media.

The computing system (400) in FIG. 4A may be connected to or be a part of a network. For example, as shown in FIG. 4B, the network (420) may include multiple nodes (*e.g.,* node X (422), node Y (424)). Each node may correspond to a computing system, such as the computing system shown in FIG. 4A, or a group of nodes combined may correspond to the computing system shown in FIG. 4A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (400) may be located at a remote location and connected to the other elements over a network.

The nodes (*e.g.,* node X (422), node Y (424)) in the network (420) may be configured to provide services for a client device (426), including receiving requests and transmitting responses to the client device (426). For example, the nodes may be part of a cloud computing system. The client device (426) may be a computing system, such as the computing system shown in FIG. 4A. Further, the client device (426) may include and/or perform all or a portion of one or more embodiments of the disclosure.

The computing system of FIG. 4A may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a GUI that displays information on a display device. The GUI may include various GUI widgets that organize what data is shown as well as how data is presented to a user. Furthermore, the GUI may present data directly to the user, *e.g.*, data presented as actual data values through text, or rendered by the computing device into a visual representation of the data, such as through visualizing a data model.

In the application, ordinal numbers (*e.g.*, first, second, third, *etc.*) may be used as an adjective for an element (*i.e.*, any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, or is an "inclusive or" and, as such includes "and." Further, items joined by an or may include any combination of the items with any number of each item unless expressly stated otherwise.

In the above description, numerous specific details are set forth in order to provide a more thorough understanding of the disclosure. However, it will be apparent to one of ordinary skill in the art that the disclosure may be practiced without these specific details. In other instances, well-known features have not been described in detail to avoid unnecessarily complicating the description. Further, other embodiments not explicitly described above can be devised which do not depart from the scope of the disclosure as disclosed herein.

Further examples of feature combinations taught by the present disclosure are set out in the following numbered clauses:

1. A method comprising:

   receiving real-time transaction data;
   processing a transaction of the real-time transaction data to identify a source node and a target node of a graph;
   processing the transaction to update an affinity score of an edge from the source node to the target node;
   receiving a request;
   selecting, responsive to the request, the target node using the affinity score after updating the affinity score; and
   presenting a response using the target node.

2. The method of clause 1, further comprising:
   presenting the response to a requesting device that transmitted the request, wherein the requesting device is represented by a requesting node of the graph, and wherein the requesting device displays the response.

3. The method of clause 1 or clause 2, further comprising:
   presenting the response to a requesting device that transmitted the request, wherein the response comprises a link to use a target device to process a subsequent transaction, wherein the target device is represented by the target node in the graph.

4. The method of any preceding clause, further comprising:

   calculating the affinity score using a previous affinity score for the edge; and
   normalizing a value of the affinity score with a sigmoid function.

5. The method of any preceding clause, further comprising:
   selecting the target node using a resampling variable.

6. The method of any preceding clause, further comprising:
   reconfiguring, after presenting the response, the edge to disconnect the target node by setting the affinity score from the source node to the target node to zero.

7. The method of any preceding clause, further comprising:
   selecting the target node using the affinity score and a transitivity score.

8. The method of any preceding clause, further comprising:
   selecting the target node, wherein the affinity score is one of a plurality of affinity scores of the edge.

9. The method of any preceding clause, further comprising:

selecting the target node by calculating a weighted score as a weighted composite of a plurality of affinity scores of the edge.

10. The method of any preceding clause, further comprising:
selecting the target node by calculating a composite score as a weighted composite of a plurality of affinity scores of a plurality of edges, wherein the plurality of affinity scores comprises the affinity score, and wherein the plurality of edges comprises the edge.

11. A system comprising:

a transaction controller configured to update an affinity score;
a selection controller configured to select a target node;
an application executing on one or more servers and configured for:

receiving real-time transaction data;
processing a transaction of the real-time transaction data to identify a source node and the target node of a graph;
processing, by the transaction controller, the transaction to update the affinity score of an edge from the source node to the target node;
receiving a request;
selecting, by the selection controller and responsive to the request, the target node using the affinity score after updating the affinity score; and
presenting a response using the target node.

12. The system of clause 11, wherein the application is further configured for:
presenting the response to a requesting device that transmitted the request, wherein the requesting device is represented by a requesting node of the graph, and wherein the requesting device displays the response.

13. The system of clause 11 or clause 12, wherein the application is further configured for:
presenting the response to a requesting device that transmitted the request, wherein the response comprises a link to use a target device to process a subsequent transaction, wherein the target device is represented by the target node in the graph.

14. The system of any of clauses 11 to 13, wherein the application is further configured for:

calculating the affinity score using a previous affinity score for the edge; and
normalizing a value of the affinity score with a sigmoid function.

15. The system of any of clauses 11 to 14, wherein the application is further configured for:
selecting the target node using a resampling variable.

16. The system of any of clauses 11 to 15, wherein the application is further configured for:
reconfiguring, after presenting the response, the edge to disconnect the target node by setting the affinity score from the source node to the target node to zero.

17. The system of any of clauses 11 to 16, wherein the application is further configured for:
selecting the target node using the affinity score and a transitivity score.

18. The system of any of clauses 11 to 17, wherein the application is further configured for:
selecting the target node, wherein the affinity score is one of a plurality of affinity scores of the edge.

19. The system of any of clauses 11 to 18, wherein the application is further configured for:
selecting the target node by calculating a weighted score as a weighted composite of a plurality of affinity scores of the edge.

20. A method comprising:

transmitting a request;

receiving a response to the request, wherein the response is generated by:

processing a transaction of the real-time transaction data to identify a source node and a target node of a graph;
processing the transaction to update an affinity score of an edge from the source node to the target node;
selecting the target node using the affinity score after updating the affinity score; and

displaying the response.

**Claims**

1. A method comprising:

receiving real-time transaction data;
processing a transaction of the real-time transaction data to identify a source node and a target node of a graph;
processing the transaction to update an affinity score of an edge from the source node to the target node;
receiving a request;
selecting, responsive to the request, the target node using the affinity score after updating the affinity score; and
presenting a response using the target node.

2. The method of claim 1, further comprising:
presenting the response to a requesting device that transmitted the request, wherein the requesting device is represented by a requesting node of the graph, and wherein the requesting device displays the response.

3. The method of claim 1 or claim 2, further comprising:
presenting the response to a requesting device that transmitted the request, wherein the response comprises a link to use a target device to process a subsequent transaction, wherein the target device is represented by the target node in the graph.

4. The method of any preceding claim, further comprising:

calculating the affinity score using a previous affinity score for the edge; and
normalizing a value of the affinity score with a sigmoid function.

5. The method of any preceding claim, further comprising:
selecting the target node using a resampling variable.

6. The method of any preceding claim, further comprising:
reconfiguring, after presenting the response, the edge to disconnect the target node by setting the affinity score from the source node to the target node to zero.

7. The method of any preceding claim, further comprising:
selecting the target node using the affinity score and a transitivity score.

8. The method of any preceding claim, further comprising:
selecting the target node, wherein the affinity score is one of a plurality of affinity scores of the edge.

9. The method of any preceding claim, further comprising:
selecting the target node by calculating a weighted score as a weighted composite of a plurality of affinity scores of the edge.

10. The method of any preceding claim, further comprising:
selecting the target node by calculating a composite score as a weighted composite of a plurality of affinity scores of a plurality of edges, wherein the plurality of affinity scores comprises the affinity score, and wherein the plurality of edges comprises the edge.

11. A system comprising:

a transaction controller configured to update an affinity score;
a selection controller configured to select a target node;
an application executing on one or more servers and configured for:

> receiving real-time transaction data;
> processing a transaction of the real-time transaction data to identify a source node and the target node of a graph;
> processing, by the transaction controller, the transaction to update the affinity score of an edge from the source node to the target node;
> receiving a request;
> selecting, by the selection controller and responsive to the request, the target node using the affinity score after updating the affinity score; and presenting a response using the target node.

12. The system of claim 11, wherein the application is further configured for:
presenting the response to a requesting device that transmitted the request, wherein the requesting device is represented by a requesting node of the graph, and wherein the requesting device displays the response.

13. The system of claim 11 or claim 12, wherein the application is further configured for:
presenting the response to a requesting device that transmitted the request, wherein the response comprises a link to use a target device to process a subsequent transaction, wherein the target device is represented by the target node in the graph.

14. The system of any of claims 11 to 13, wherein the application is further configured for:

> calculating the affinity score using a previous affinity score for the edge; and
> normalizing a value of the affinity score with a sigmoid function.

15. A method comprising:

> transmitting a request;
> receiving a response to the request, wherein the response is generated by:

>> processing a transaction of the real-time transaction data to identify a source node and a target node of a graph;
>> processing the transaction to update an affinity score of an edge from the source node to the target node;
>> selecting the target node using the affinity score after updating the affinity score; and

> displaying the response.

SERVER 112

SERVER APPLICATION 115

TRANSACTIONS 117

TRANSACTION 118

GRAPH CONTROLLER 120

GRAPH 122

NODES 124

NODE 125

NODE IDENTIFIER 127

ENTITY INFORMATION 128

EDGES 129

EDGE 130

SOURCE IDENTIFIER 132

TARGET IDENTIFIER 135

AFFINITY SCORE 138

REQUESTS 139

REQUEST 140

SELECTION CONTROLLER 142

RESPONSES 145

RESPONSE 146

LINK 148

USER DEVICE A 102

USER APPLICATION A 105

USER DEVICE B 107

USER APPLICATION B 108

USER DEVICE N 109

USER APPLICATION N 110

REPOSITORY 150

TRANSACTION DATA 152

GRAPH DATA 155

ENTITY DATA 158

100

FIGURE 1

START

RECEIVING REAL-TIME TRANSACTION DATA
202

PROCESSING A TRANSACTION OF THE REAL-TIME
TRANSACTION DATA TO IDENTIFY A SOURCE NODE
AND A TARGET NODE OF A GRAPH
205

PROCESSING THE TRANSACTION TO UPDATE AN
AFFINITY SCORE OF AN EDGE FROM THE SOURCE
NODE TO THE TARGET NODE
208

RECEIVING A REQUEST
210

SELECTING, RESPONSIVE TO THE REQUEST, THE
TARGET NODE USING THE AFFINITY SCORE AFTER
UPDATING THE AFFINITY SCORE
212

PRESENTING A RESPONSE USING THE TARGET
NODE
215

END

200

*FIGURE 2*

302

REQUEST A
TRANSACTION
SUGGESTION 305

*FIGURE 3A*

320

BRANIAC
INTERNATIONAL
322

EDGE B
353

EDGE A
351

SUPERMAN
UNLIMITED
321

EDGE E
359

BATMAN
INDUSTRIES
324

EDGE F
361

EDGE C
355

EDGE D
357

EDGE G
363

EDGE H
365

LEX LUTHOR
LABORATORIES
323

ROBIN
CORPORATION
325

*FIGURE 3B*

382

PROCESS TRANSACTION WITH
ROBIN CORPORATION 385

PROCESS TRANSACTION WITH
LEX LUTHOR LABORATORIES 388

*FIGURE 3C*

400
COMPUTING
SYSTEM

408
OUTPUT DEVICE(S)

404
NON-PERSISTENT
STORAGE

402
COMPUTER
PROCESSOR(S)

406
PERSISTENT
STORAGE

412
COMMUNICATION
INTERFACE

410
INPUT DEVICE(S)

*FIGURE 4A*

420
NETWORK

422
NODE X

424
NODE Y

426
CLIENT DEVICE

*FIGURE 4B*

Europäisches
Patentamt

European
Patent Office

Office européen
des brevets

# EUROPEAN SEARCH REPORT

Application Number

**EP 23 19 4232**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TALBI SAID ET AL: "Interest-based trust management scheme for social internet of things", JOURNAL OF AMBIENT INTELLIGENCE AND HUMANIZED COMPUTING, SPRINGER BERLIN HEIDELBERG, BERLIN/HEIDELBERG, vol. 11, no. 3, 25 February 2019 (2019-02-25), pages 1129-1140, XP037023970, ISSN: 1868-5137, DOI: 10.1007/S12652-019-01256-8 [retrieved on 2019-02-25] * the whole document * | 1-15 | INV. G06N20/00 G06Q20/00 |

TECHNICAL FIELDS
SEARCHED      (IPC)

G06N
G07G
G06Q

The present search report has been drawn up for all claims

| Place of search | Date of completion of the search | Examiner |
|---|---|---|
| The Hague | 9 February 2024 | Szymanski, Francois |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................................
& : member of the same patent family, corresponding
    document

EPO FORM 1503 03.82 (P04C01)